# EUROPEAN PATENT SPECIFICATION

(11) **EP 3 073 258 B1**
(45) Date of publication and mention of the grant of the patent: **05.05.2021**
(21) Application number: 16161655.2
(22) Date of filing: 22.03.2016
(51) Int. Cl.: G01N 27/407, C22C 38/00, C22C 38/02, C22C 38/04, C22C 38/18, C22C 38/40

(54) **GAS SENSOR**
GASSENSOR
CAPTEUR DE GAZ

(30) Priority: 26.03.2015 JP 2015063566
(43) Date of publication of application: 28.09.2016
(60) Divisional application: 20179100.1
(73) Proprietor: NGK Insulators, Ltd., Nagoya-city, Aichi 467-8530 (JP)
(72) Inventor: TANAKA, Hiroyuki, Nagoya-city, Aichi 467-8530 (JP); KATO, Kenji, Nagoya-city, Aichi 467-8530 (JP)
(74) Representative: Mewburn Ellis LLP

(56) References cited:
- EP-A1- 2 400 294
- US-A- 4 983 271
- US-A1- 2005 132 778
- US-A1- 2011 226 618

## Description

### BACKGROUND OF THE INVENTION

### Field of the Invention

The present invention relates to a gas sensor, and particularly to characteristics of a metal member which defines a reference gas space in the gas sensor.

### Description of the Background Art

A gas sensor including a sensor element formed of an oxygen-ion conductive solid electrolyte ceramic such as zirconia (ZrO₂) has been conventionally known as a device for measuring a predetermined gas component (for example, NOx) in a measurement gas such as an exhaust gas and a combustion gas in an internal combustion engine, usually a car engine. When a measuring object is NOx, such a gas sensor is particularly referred to as a NOx sensor.

In the gas sensor, an elongated thin-plate like sensor element (detection element) including, as a main constituent material, oxygen-ion conductive solid electrolyte ceramic such as zirconia (ZrO₂) is fixed by a plurality of ceramic supporters made of ceramic insulator and ceramic powder compacts each filled between the ceramic supporters, such as talc, in a ceramic housing and a metallic (stainless) cylindrical inner tube welded and fixed to the housing, and is hermetically sealed with the powder compacts (for example, see International Publication No. 2013/005491).

Such a gas sensor as is disclosed in the International Publication No. 2013/005491 is used in a state where a gas inlet provided on one end of the sensor element is disposed in a measurement gas atmosphere and a reference gas introduction space provided on other end of the sensor element is disposed in an air, that is a reference gas. The measurement gas normally has a high temperature of 200 to 900°C, and the sensor element itself is also heated approximately to the same temperature by a heater provided inside. Accordingly, the gas sensor operates in a high temperature state.

It is also already known that an oxidization of a metal coating layer applied to a component of a gas turbine, which is heated at a high temperature, is more promoted as its surface roughness gets larger (for example, see "High Temperature Oxidation Behavior of Low Pressure Plasma Sprayed MCrAlY Coatings for Gas Turbines", Y.Etori and M.Okada, Yokosuka Research Laboratory Rep. No. WO0045 (2001)).

When such a NOx sensor as is disclosed in the International Publication No. 2013/005491 having the conventional configuration is driven for the first time after its completion, more specifically, when the NOx sensor is disposed and rendered active (conductive) for the first time under a measurement gas atmosphere of high temperature or an equivalent test gas atmosphere, a signal abnormality often occurs and thus causes the NOx sensor to require time for recovery. The signal abnormality herein includes, for example, a state where a potential difference between a reference electrode which is disposed in the sensor element to be in contact with the reference gas and the other electrode which is disposed in the sensor element or disposed on a surface of the sensor element to be in contact with the measurement gas shows a value different from a predetermined reference value.

Furthermore EP 2 400 294 A1 discloses a gas sensor with an inner tube made out of SUS430 and with an inner roughness Ra of 1 µm.

### SUMMARY OF THE INVENTION

The present invention relates to a gas sensor, and particularly to characteristics of a metal member which partitions a reference gas space in the gas sensor.

The gas sensor of the present invention includes the features according to claim 1.

According to the present invention, even when the metal member formed of a ferritic stainless steel, which is relatively easily-oxidized, although inexpensive for the stainless steel, is provided in a position where heat conduction can be received from the measurement gas, the occurrence of the signal abnormality in the gas sensor caused by an oxidization of the metal member in accordance with a temperature rise at a start of driving is preferably suppressed.

Accordingly, it is an object of the present invention to provide a gas sensor which can preferably suppress an occurrence of signal abnormality at a start of driving.

### BRIEF DESCRIPTION OF THE DRAWINGS

Fig. 1 is an external perspective view of a gas sensor 1.
Fig. 2 is a partial cross-sectional view showing a main configuration of an inside of the gas sensor 1.
Fig. 3 is a pattern perspective view showing a configuration of a sensor element 100.
Fig. 4 is a graph showing a relationship between a surface roughness of an outer periphery surface 6s of an inner tube 6 and a characteristic change generation temperature when the gas sensor 1 is driven for the first time.

### DESCRIPTION OF THE PREFERRED EMBODIMENTS

### <Configuration of Gas Sensor>

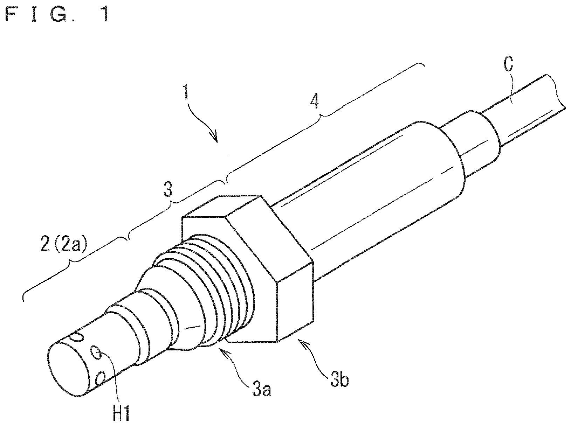

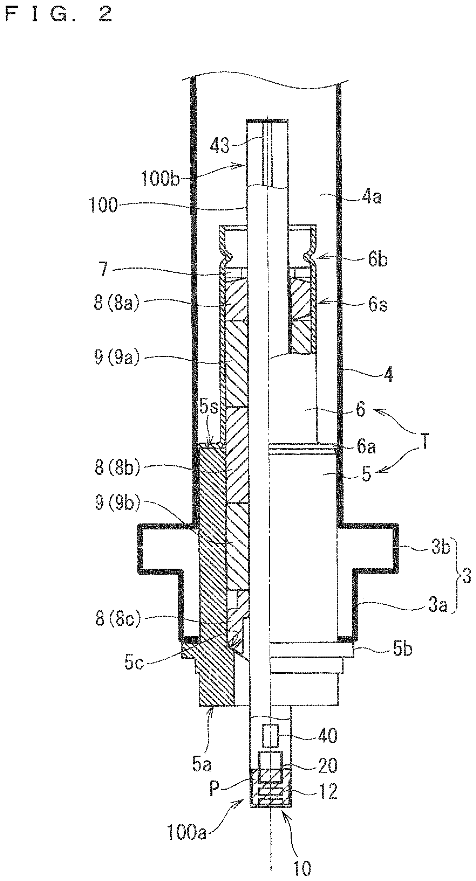

Fig. 1 is an external perspective view of a gas sensor (more specifically, a main body thereof) 1 according to the present preferred embodiment. In the present embodiment, the gas sensor 1 serves to detect a predetermined gas component (such as NOx) with a sensor element 100 (Fig. 2) included therein.

The outside of the gas sensor 1 is mainly formed of a first cover 2, a screw nut 3, and a second cover 4.

The first cover 2 is an approximately cylindrical metal exterior member that protects a portion of the sensor element 100 that comes into direct contact with the measurement gas in use, which is specifically a first tip 100a including a gas inlet 10 to which the measurement gas is introduced from an outer space and a closed space such as a buffer space 12, a first internal space 20, and a second internal space 40 (described hereinafter).

The first cover 2 has a double-layer structure of an outside cover 2a and an inside cover (not shown). Each of the outside cover 2a and inside cover has a circular bottom on one side and has a plurality of through holes through which a gas can pass in the side portion. Fig. 1 illustrates a plurality of through holes H1 provided in the outside cover 2a, which are merely an example. A position and number of through holes HI arranged may be appropriately determined in consideration of how a measurement gas flows into the first cover 2.

The screw nut 3 is an annular member to be used when the gas sensor 1 is fixed at a measurement position. The screw nut 3 includes a threaded screw portion 3a and a nut portion 3b to be rotated when the screw portion 3a is screwed. The screw portion 3a is screwed with a nut provided at a position at which the gas sensor 1 is mounted. For example, the screw portion 3a is screwed with a nut portion provided in a car exhaust pipe, whereby the gas sensor 1 is fixed to the exhaust pipe such that the first cover 2 side thereof is exposed in the exhaust pipe.

The second cover 4 is a metal cylindrical member that protects other part of the gas sensor 1. A cable C for electrically connecting the gas sensor 1 and a drive controller (not shown) extends from an end of the second cover 4.

Fig. 2 a partial cross-sectional view showing a main configuration of an inside of the gas sensor 1. The gas sensor 1 includes the sensor element 100. The sensor element 100 is substantially an elongated cylindrical or thin-plate like member including, as a main constituent material, an element body of oxygen-ion conductive solid electrolyte ceramic such as zirconia.

As shown in Fig. 2, inside the gas sensor 1, a washer 7, three ceramic supporters 8 (8a, 8b, and 8c), and two powder compacts 9 (9a and 9b) are each annularly mounted to the part of the sensor element 100 between a first tip 100a, which includes the gas inlet 10 and the like, and a second tip 100b, which includes a reference gas inlet space 43 described hereinafter, such that the sensor element 100 is positioned about the axis. The ceramic supporter 8 is a ceramic insulator. Meanwhile, the powder compact 9 is obtained by shaping ceramic powders such as talc. In the following description, the washer 7, the ceramic supporters 8, and the powder compacts 9 are collectively referred to as annularly-mounted members, in some cases.

Moreover, a cylindrical tubular body (inner tube welded product) T, which is obtained by integrating a housing 5 being a ceramic cylindrical member and an inner tube 6 being a metallic (stainless) cylindrical member, is annularly mounted to a periphery of the annularly-mounted members.

The tubular body T is formed by integrally welding a bend 6a bent outwardly, which is included in one end of the inner tube 6, to an end surface 5s of the housing 5. The housing 5 and inner tube 6 have substantially the same inside diameter and are connected coaxially. An inside diameter of the tubular body T is set to be larger than designed values of maximum outside diameters of the respective annularly-mounted members.

More specifically, the housing 5 is provided with a tapered portion 5c at one end side of the inside thereof, and the washer 7, the ceramic supporters 8 (8a, 8b, 8c), and the powder compacts 9 (9a, 9b), which are annularly mounted to the sensor element 100, are engaged. The above configuration is achieved by fitting the tubular body T to the outer periphery of the annularly-mounted members after the annularly-mounted members are annularly mounted to the sensor element 100. After the engagement, a predetermined load is applied from an upper side of the washer 7 to compress the powder compacts 9, so that a sealing is provided in a region between the first tip 100a of the sensor element 100, which includes the gas inlet 10 and the like, and the second tip 100b inside the tubular body T. Moreover, after the seal, a portion of the inner tube 6 located just above the washer 7 is swaged from outside, thereby forming a concave portion 6b recessed inwardly. According to the above configuration, the annular-mounted members can be tied up between the tapered portion 5c and the concave portion 6b inside the tubular body T, and airtightness between the measurement gas space including a periphery of the first tip 100a and the reference gas space including a periphery of the second tip 100b is secured.

In the gas sensor 1 according to the present preferred embodiment, characteristics of the inner tube 6 are distinguishing, which will be described in detail hereinafter.

Moreover, in the gas sensor 1, an outer periphery of the tubular body T is covered by the screw nut 3 and the second cover 4 only whose cross-section surface are briefly shown in Fig. 2. Specifically, the screw nut 3 is annularly mounted so as to be contact with a projection portion (flange portion) 5b. Moreover, the second cover 4 is mounted so as to be fitted into an annular groove between the screw nut 3 and the housing 5, which is formed through the above annular mounting.

In the gas sensor 1, an inner space 4a of the second cover 4 corresponds to the reference gas space. In other words, the second cover 4 partitions the reference gas space and outside of the gas sensor 1. However, the inner space 4a of the second cover 4 is not hermetically sealed in a state where the gas sensor 1 is attached to a pipe including the measurement gas inside such as an exhaust pipe of an engine, for example, by the screw nut 3, although the inner space 4a is separated from the pipe. That is to say, the air, which is the reference gas, can enter the inner space 4a of the second cover 4 from a gap between the second cover 4 and the cable C extending from one end of the second cover 4, for example.

Although not shown in Fig. 2, a plurality of terminal electrodes which are connected to, via a lead wire not shown, various electrodes provided inside the sensor element 100 are formed on a surface of the second tip 100b which is an uppermost end of the sensor element 100 in Fig. 2, and the second tip 100b is actually clamped by a housing member not shown including a connection terminal for providing an electrical connection between the terminal electrodes and the cable C. Accordingly, the sensor element 100 is electrically connected to the outside via the cable C. However, the housing member does not prevent the air from entering and exiting the inner space 4a of the second cover 4.

In the meanwhile, the first cover 2 made up of the outside cover 2a and inside cover is connected to a tubular portion 5a at the tip of the housing 5.

The above configuration allows the gas sensor 1 to completely separate, in the sensor element 100, the measurement gas space around the first tip 100a and the reference gas space around the second tip 100b in a state where the gas sensor 1 is mounted at a predetermined position. Accordingly, the concentration of a target gas component in the measurement gas can be measured accurately.

### <Detailed Configuration of the Sensor Element>

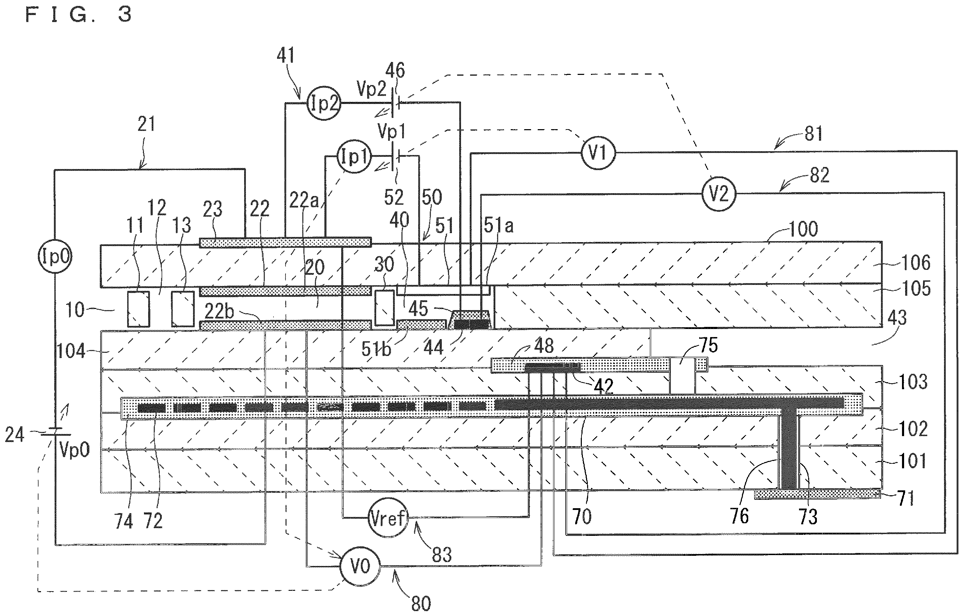

Fig. 3 is a schematic cross-sectional view showing a configuration of the sensor element 100. A sensor 100 is an element having a structure in which six layers of a first substrate layer 101, a second substrate layer 102, a third substrate layer 103, a first solid electrolyte layer 104, a spacer layer 105, and a second solid electrolyte layer 106 are laminated in this order from the lower side in the drawing, each of the layers being composed of an oxygen ion conducting solid electrolyte layers such as zirconia (ZrO₂). In addition, the solid electrolyte configuring those six layers is densely airtight. The sensor element 100 is provided in such a manner that after a predetermined process and printing of a circuit pattern are performed on a ceramic green sheet corresponding to each layer, they are laminated and integrated by baking.

The gas inlet 10, a first diffusion-controlling part 11, the buffer space 12, a second diffusion-controlling part 13, the first inner space 20, a third diffusion-controlling part 30, and the second inner space 40 are adjacently formed so as to be communicated in this order between a lower surface of the second solid electrolyte layer 106 and an upper surface of the first solid electrolyte layer 104, at the first tip 100a side of the sensor element 100.

The gas inlet 10, the buffer space 12, the first inner space 20, and the second inner space 40 are internal spaces provided by hollowing a spacer layer 105 in the sensor element 100, in which their upper parts are defined by the lower surface of the second solid electrolyte layer 106, their lower parts are defined by the upper surface of the first solid electrolyte layer 104, and their side parts are defined by a side surface of the spacer layer 105.

Each of the first diffusion-controlling part 11, the second diffusion-controlling part 13, and the third diffusion-controlling part 30 is provided as two horizontally long (an opening has a longitudinal direction in a direction perpendicular to the drawing) slits. In addition, a portion from the gas inlet 10 to the second inner space 40 is also referred to as a gas distribution part.

In addition, at the second tip 100b side of the sensor element 100, a reference gas inlet space 43 is provided between an upper surface of the third substrate layer 103 and a lower surface of the spacer layer 105, in which its side part is defined by a side surface of the first solid electrolyte layer 104. The reference gas inlet space 43 is communicated with the inner space 4a of the second cover 4 serving as the reference gas space described above. Accordingly, the air is introduced to the reference gas inlet space 43 as the reference gas. As described above, the second tip 100b side of the sensor element 100 is clamped by the housing member not shown, however, the reference gas inlet space 43 is not blocked by the housing member, so that the housing member does not have influence on the communication between the reference gas inlet space 43 and the inner space 4a of the second cover 4.

An air inlet layer 48 is composed of porous alumina, and air, that is the reference gas, is introduced to the air inlet layer 48 through the reference gas inlet space 43. In addition, the air inlet layer 48 is formed to cover a reference electrode 42. The air inlet layer 48 and the reference gas inlet space 43 are separated from the gas distribution part.

The reference electrode 42 is formed so as to be sandwiched between the upper surface of the third substrate layer 103 and the first solid electrolyte layer 104, and as described above, the air inlet layer 48 leading to the reference gas inlet space 43 is provided around the reference electrode 42. Accordingly, the gas sensor 100 is operated, the reference electrode 42 always keeps in contact with the air, that is the reference gas. In addition, as will be described below, an oxygen concentration (oxygen partial pressure) in the first inner space 20 or the second inner space 40 can be measured using the reference electrode 42.

The gas inlet 10 is a portion open to an external space (more specifically, in the first cover 2) in the gas distribution part, and a measurement gas is introduced from the external space into the sensor element 100 through the gas inlet 10.

The first diffusion-controlling part 11 is a portion to apply a predetermined diffusion resistance to the measurement gas which is brought in from the gas inlet 10.

The buffer space 12 is a space provided to guide the measurement gas introduced from the first diffusion-controlling part 11 to the second diffusion-controlling part 13.

The second diffusion-controlling part 13 is a portion to apply a predetermined diffusion resistance to the measurement gas introduced from the buffer space 12 to the first inner space 20.

When the measurement gas is introduced from the outside the sensor element 100 to the first inner space 20, the measurement gas which was abruptly introduced from the gas inlet 10 into the sensor element 100 due to pressure fluctuation of the measurement gas in the external space (pulsation of exhaust pressure in the case that the measurement gas is an exhaust gas of a car) is not directly introduced into the first inner space 20 but introduced into the first inner space 20 after the concentration fluctuation of the measurement gas has been negated through the first diffusion-controlling part 11, the buffer space 12, and the second diffusion-controlling part 13. Accordingly, the concentration fluctuation of the measurement gas is negligibly small when the gas is introduced to the first inner space 20.

The first inner space 20 is provided as a space to adjust an oxygen partial pressure in the measurement gas which has been introduced through the second diffusion-controlling part 13. The oxygen partial pressure is adjusted by an operation of a main pump cell 21.

The main pump cell 21 is an electrochemical pump cell including an inner pump electrode 22 having a ceiling electrode part 22a provided on almost all over the lower surface of the second solid electrolyte layer 106 which faces the first inner space 20, an outer pump electrode 23 provided on the upper surface of the second solid electrolyte layer 106 so as to be exposed to the external space and opposed to the ceiling electrode part 22a, and the second solid electrolyte layer 106 sandwiched between the above electrodes.

The inner pump electrode 22 lies astride the upper and lower solid electrolyte layers (second solid electrolyte layer 106 and the first solid electrolyte layer 104) to define the first inner space 20, and the spacer layer 105 to define the side wall thereof. Specifically, the ceiling electrode part 22a is formed on the lower surface of the second solid electrolyte layer 106 to define a ceiling surface of the first inner space 20, a bottom electrode part 22b is formed on the upper surface of the first solid electrolyte layer 104 to define a bottom surface thereof, and a side electrode part (not shown) is formed on a side wall surface (inner surface) of the spacer layer 105 to define each side wall of the first inner space 20, so as to connect the ceiling electrode part 22a to the bottom electrode part 22b, so that a structure having a tunnel configuration at the portion of the side electrode part is provided.

Each of the inner pump electrode 22 and the outer pump electrode 23 is formed as a porous cermet electrode (cermet electrode including Pt containing Au by 1% and zirconia). However, the inner pump electrode 22 which is in contact with the measurement gas is formed of a material whose reducing ability with respect to NOx component in the measurement gas is weakened.

The main pump cell 21 can pump out the oxygen in the first inner space 20 to the external space, or pump in the oxygen in the external space into the first inner space 20 by means of applying a desired pump voltage Vp0 between the inner pump electrode 22 and the outer pump electrode 23 so as to generate a pump current Ip0 in a positive direction or negative direction between the inner pump electrode 22 and the outer pump electrode 23. In Fig. 3, a connecting wire which electrically connects the respective elements constituting the main pump cell 21 is lead from each of the inner pump electrode 22 and the outer pump electrode 23 in a vertical direction in the drawing, however, it is illustrated in the above manner for convenience. In the actual sensor element 100, the terminal electrode not shown is provided on the second tip 100b to correspond to each pump electrode, and the pump electrode and the terminal electrode are connected via the lead wire not shown formed inside the sensor element 100. Other pump cell and sensor cell described below also have the similar configuration. The connection between each of the terminal electrode and the outside of the gas sensor 1 is achieved by connecting each of the terminal electrode and the connection terminal which has been previously connected to the corresponding cable C as a resultant of above-described clamping with the housing member.

Moreover, in order to detect the oxygen concentration (oxygen partial pressure) in the atmosphere of the first inner space 20, an electrochemical sensor cell, that is, a main-pump-controlling oxygen-partial-pressure detection sensor cell 80 includes the inner pump electrode 22, the second solid electrolyte layer 106, the spacer layer 105, the first solid electrolyte layer 104, the third substrate layer 103, and the reference electrode 42.

The oxygen concentration (oxygen partial pressure) in the first inner space 20 can be found by measuring an electromotive force V0 in the main-pump-controlling oxygen-partial-pressure detection sensor cell 80. Furthermore, the pump current Ip0 is controlled by feedback-controlling the Vp0 to keep the electromotive force V0 constant. Thus, the oxygen concentration in the first inner space 20 can be kept at a predetermined value.

The third diffusion-controlling part 30 is a portion to apply a predetermined diffusion resistance to the measurement gas whose oxygen concentration (oxygen partial pressure) has been controlled in the first inner space 20 by the operation of the main pump cell 21, and introduces the measurement gas to the second inner space 40.

The second inner space 40 is provided to perform an operation regarding the measurement of a nitrogen oxide (NOx) concentration in the measurement gas which has been introduced through the third diffusion-controlling part 30. The NOx concentration is measured in the second inner space 40 whose oxygen concentration has been adjusted by an auxiliary pump cell 50, by an operation of a measurement pump cell 41.

After the oxygen concentration (oxygen partial pressure) has been previously adjusted in the first inner space 20, the oxygen partial pressure of the measurement gas which has been introduced through the third diffusion-controlling part is further adjusted by the auxiliary pump cell 50 in the second inner space 40. Accordingly, since the oxygen concentration in the second inner space 40 can be kept constant with a high degree of accuracy, the gas sensor 1 can measure the NOx concentration with a high degree of accuracy.

The auxiliary pump cell 50 is an auxiliary electrochemical pump cell including an auxiliary pump electrode 51 having a ceiling electrode part 51a provided on almost the whole lower surface of the second solid electrolyte layer 106 which faces the second inner space 40, the outer pump electrode 23 (not limited to the outer pump electrode 23 but may be an appropriate electrode positioned outside the sensor element 100), and the second solid electrolyte layer 106.

The auxiliary pump electrode 51 is provided in the second inner space 40 so as to have a tunnel structure similar to the inner pump electrode 22 provided in the first inner space 20. That is to say, the ceiling electrode part 51a is formed on the second solid electrolyte layer 106 defining a ceiling surface of the second inner space 40, a bottom electrode part 51b is formed on the first solid electrolyte layer 104 defining a bottom surface of the second inner space 40, and a side electrode part (not shown) to connect the ceiling electrode part 51a to the bottom electrode part 51b is provided on each wall surface of the spacer layer 105 defining a side wall of the second inner space 40.

In addition, the auxiliary pump electrode 51 is also formed of a material whose reducing ability with respect to the NOx component in the measurement gas is weakened, similar to the inner pump electrode 22.

The auxiliary pump cell 50 can pump out the oxygen in the atmosphere of the second inner space 40 to the external space, or pump in the oxygen in the external space into the second inner space 40 by means of applying a desired pump voltage Vp1 between the auxiliary pump electrode 51 and the outer pump electrode 23.

Moreover, in order to control the oxygen partial pressure in the atmosphere of the second inner space 40, an electrochemical sensor cell, that is, an auxiliary-pump-controlling oxygen-partial-pressure detection sensor cell 81 includes the auxiliary pump electrode 51, the reference electrode 42, the second solid electrolyte layer 106, the spacer layer 105, the first solid electrolyte layer 104, and the third substrate layer 103.

In this regard, the auxiliary pump cell 50 is pumped by a variable power supply 52 whose voltage is controlled based on an electromotive force V1 detected by the auxiliary-pump-controlling oxygen-partial-pressure detection sensor cell 81. Thus, the oxygen partial pressure in the atmosphere of the second inner space 40 can be lowered so as not to substantially affect the measurement of NOx.

In addition, at the same time, its pump current Ip1 is used to control the electromotive force of the main-pump-controlling oxygen-partial-pressure detection sensor cell 80. Specifically, the pump current Ip1 is inputted to the main-pump-controlling oxygen-partial-pressure detection sensor cell 80 as a control signal and then its electromotive force V0 is controlled, so that an inclination of the oxygen partial pressure in the measurement gas which is introduced from the third diffusion-controlling part 30 to the second inner space 40 is controlled to be always kept constant. When used as the NOx sensor, the oxygen concentration in the second inner space 40 is kept at a constant value such as about 0.001 ppm, by the operations of the main pump cell 21 and the auxiliary pump cell 50.

The measuring pump cell 41 measures the NOx concentration in the measurement gas, in the second inner space 40. The measuring pump cell 41 is an electrochemical pump cell including a measurement electrode 44 provided on the upper surface of the first solid electrolyte layer 104 which faces the second inner space 40 so as to be apart from the third diffusion-controlling part 30, the outer pump electrode 23, the second solid electrolyte layer 106, the spacer layer 105, and the first solid electrolyte layer 104.

The measurement electrode 44 is a porous cermet electrode. The measurement electrode 44 also functions as a NOx reducing catalyst to reduce NOx existing in the atmosphere of the second inner space 40. Furthermore, the measurement electrode 44 is covered with a fourth diffusion-controlling part 45.

The fourth diffusion-controlling part 45 is a film made of a porous body mostly including alumina (Al₂O₃). The fourth diffusion-controlling part 45 takes a roll in limiting a NOx amount flowing into the measurement electrode 44, and also functions as a protection film of the measurement electrode 44.

The measuring pump cell 41 pumps out the oxygen generated due to decomposition of the nitrogen oxide in the atmosphere around the measurement electrode 44 by catalyst active action of the measurement electrode 44, and can detect its generation amount as a pump current (also referred to as an NOx current) Ip2.

Moreover, in order to detect an oxygen partial pressure around the measurement electrode 44, an electrochemical sensor cell, that is, a measuring-pump-controlling oxygen-partial-pressure detection sensor cell 82 includes the second solid electrolyte layer 106, the spacer layer 105, the first solid electrolyte layer 104, the third substrate layer 3, the measurement electrode 44, and the reference electrode 42. A variable power supply 46 is controlled based on an electromotive force V2 detected by the measuring-pump-controlling oxygen-partial-pressure detection sensor cell 82.

The measurement gas which has been introduced in the second inner space 40 reaches the measurement electrode 44 through the fourth diffusion-controlling part 45 under the condition that its oxygen partial pressure is controlled. The nitrogen oxide in the measurement gas around the measurement electrode 44 is reduced and oxygen is generated (2NO → N₂ + O₂). Thus, the generated oxygen is pumped by the measuring pump cell 41, and at this time a voltage Vp2 of the variable power supply is controlled so that the control voltage V2 detected by the measuring-pump-controlling oxygen-partial-pressure detection sensor cell 82 can be kept constant. Since the amount of oxygen generated around the measurement electrode 44 is proportional to the concentration of the nitrogen oxide in the measurement gas, the concentration of the nitrogen oxide in the measurement gas is calculated using the pump current Ip2 in the measuring pump cell 41.

In addition, if an oxygen partial pressure detecting means is provided by combining the measurement electrode 44, the first solid electrolyte layer 104, the third substrate layer 103, and the reference electrode 42, as an electrochemical sensor cell, an electromotive force can be detected based on a difference between the oxygen amount generated due to the reduction of the NOx component in the atmosphere around the measurement electrode 44 and an oxygen amount in the reference gas, and as a result, the concentration of the NOx component in the measurement gas can also be found.

What is more, an electrochemical sensor cell 83 is constituted of the second solid electrolyte layer 106, the spacer layer 105, the first solid electrolyte layer 104, the third substrate layer 103, the outer pump electrode 23, and the reference electrode 42, and the oxygen partial pressure in the measurement gas outside the sensor can be detected by an electromotive force Vref obtained by this sensor cell 83.

In the gas sensor 1 having the above configuration, the measurement gas whose oxygen partial pressure is always kept at a constant low value (which does not affect the measurement of NOx substantially) by the operations of the main pump cell 21 and the auxiliary pump cell 50 is applied to the measuring pump cell 41. Therefore, the NOx concentration in the measurement gas can be known, based on the pump current Ip2 which flows on the basis that the oxygen generated by the reduction of NOx is pumped out by the measuring pump cell 41, in approximately proportion to the NOx concentration in the measurement gas.

In the sensor element 100, the oxygen partial pressure outside the sensor element 100 can be also known by measuring the electromotive force Vref generated between the outer pump electrode 23 and the reference electrode 42.

Furthermore, in order to enhance oxygen ion conductivity of the solid electrolyte, the sensor element 100 has a heater part 70 taking a role of temperature regulation to heat the sensor element 100 and keep its temperature. The heater part 70 includes heater electrode 71, a heater 72, a through hole 73, a heater insulation layer 74, and a pressure diffusion hole 75.

The heater electrode 71 is an electrode formed to be in contact with the lower surface of the first substrate layer 101. When the heater electrode 71 is connected to an external power supply, a power can be supplied to the heater part 70 from the outside.

The heater 72 is an electric resistor formed to be sandwiched between the second substrate layer 102 and the third substrate layer 103 vertically. The heater 72 is connected to the heater electrode 71 through the through hole 73, and generates heat when a power is supplied from the outside through the heater electrode 71, and heats the solid electrolyte forming the sensor element 100 and keeps its temperature.

Then, the heater 72 is buried all over the region from the first inner space 20 to the second inner space 40, and can regulate the temperature in the whole sensor element 100 so that the solid electrolyte can be activated. The sensor element 100 in use is heated to, for example, approximately 700 to 900 °C by the heater 72.

The heater insulation layer 74 is formed of an insulator such as alumina, on upper and lower surfaces of the heater 72. The heater insulation layer 74 is formed with a view to obtaining an electric insulation between the second substrate layer 102 and the heater 72, and an electric insulation between the third substrate layer 103 and the heater 72.

The pressure diffusion hole 75 is a portion configured to penetrate the third substrate layer 103 and communicate with the reference gas inlet space 43, and formed with a view to lessening an inner pressure from rising with the temperature rise in the heater insulation layer 74.

Although not shown in Fig. 3, a predetermined region in the surface of the sensor element 100 extending from the first tip 100a in the longitudinal direction may be covered by a protection film P as shown in Fig. 2. The protection film P is a porous film made of Al₂O₃, for example, with a thickness of 10 µm to 2000 µm and is also referred to as a thermal shock resistance protection film. However, it is not necessary to provide the protection film P. The forming region of the protection film P in Fig. 2 is merely an example, so that an actual forming region may be appropriately determined in accordance with a concrete structure of the sensor element 100.

### <Detail of Inner Tube and Avoidance of Signal Abnormality>

Next, the inner tube 6 provided in the gas sensor 1 according to the present preferred embodiment will be described in more detail.

As described above, the inner tube 6 is the cylindrical metallic member which is integral with the ceramic housing 5 to constitute the tubular body T. In the gas sensor 1, the periphery of the sensor element 100 is sealed inside the tubular body T, so that the airtightness of the sensor element 100 between the measurement gas space including the periphery of the first tip 100a and the reference gas space including the periphery of the second tip 100b (the inner space 4a of the second cover 4) is secured. The inner tube 6 itself is disposed so that its outer periphery surface (a surface) 6s is exposed the inner space 4a of the second cover 4 which is the reference gas space.

When the gas sensor 1 is driven, the heat generated from the heater 72 provided in the sensor element 100 is transferred to the inner tube 6 via the sensor element 100 and further the annular-mounted members, and the heat of the high-temperature measurement gas is transferred via the housing 5. Accordingly, the temperature of the inner tube 6 rises due to the above heat conduction.

Such a temperature rise causes the oxidation of the inner tube 6 being in contact with the air in the reference gas space and an occurrence of the signal abnormality when the gas sensor 1 is driven for the first time. In the present preferred embodiment, the signal abnormality indicates a state where a potential difference between the reference electrode 42 which is disposed in the sensor element 100 to be in contact with the air which is reference gas and the measurement electrode 44 which is disposed in the sensor element 100 to be in contact with the measurement gas shows a value different from a predetermined reference value. More specifically, the signal abnormality indicates a variation of the potential difference caused by the variation of the potential of the reference electrode 42 which should originally have a constant potential, since the reference electrode 42 is provided to be in contact with the reference gas having a constant oxygen concentration. However, the signal abnormality may also be determined by focusing on a potential difference between the reference electrode 44 and an electrode other than the measurement electrode 44.

The signal abnormality is a phenomenon caused by a rapid reduction in the oxygen concentration in the reference gas space in which the air is included as the reference gas, due to two factors described below, right after the first cover 2 side of the gas sensor 1 is exposed to the measurement gas atmosphere of high temperature.
(1) Oil or moisture adhered to the surface of the metal members (mainly the inner tube 6 and the second cover 4) which face the reference gas space evaporates in accordance with the temperature rise of the metal members caused by driving the gas sensor 1, thereby relatively reducing the oxygen concentration of the reference gas space. It is confirmed that the temperature of the metal members reaches 400 °C or more at the highest point of the temperature in the metal members when the gas sensor is operated.
(2) The oxidization of the surfaces of the metal members occurs due to the temperature rise caused by driving the gas sensor 1, thereby causing a consumption of the oxygen in the reference gas space, and the oxygen concentration is reduced.

Although the above factors (1) and (2) might be resolved by changing a material of the metal members to an oil/moisture adhesion-resistant and hardly-oxidized material, there is a problem that a material cost rises. Moreover, the factor (1) is resolved when the adhered oil or moisture completely evaporates, however, the oxidization described in the factor (2) progresses with time, so that in the case the oxidization occurs noticeably, it is hard to recover from the signal abnormality.

In the present preferred embodiment, in view of the above point, a ferritic stainless steel having a composition ratio described below is used as a material of the inner tube 6, which is one of the metal members facing the reference gas space, and a surface roughness of an outer periphery surface 6s of an inner tube 6 meets a predetermined requirement, so that the occurrence of the signal abnormality is preferably suppressed.
Carbon (C): 0.12 wt% (weight %) or less;
Silicon (Si): 0.75 wt% or less;
Manganese (Mn): 1.00 wt% or less;
Phosphorus (P): 0.040 wt% or less;
Sulfur (S): 0.030 wt% or less;
Chrome (Cr): 11.00 to 18.00 wt%;
Iron (Fe): rest (Nickle (Ni) of 0.60 wt% or less may be included).

The ferritic stainless steel having the above composition ratio includes, for example, SUS430 specified by JIS (Japanese Industrial Standards). The SUS430 is the ferritic stainless steel including chrome of 16.00 to 18.00 wt% and further including the other elements which meets the above composition range. Hereinafter, the ferritic stainless steel which meets the above composition range such as the SUS430 is collectively referred to as an inner tube stainless steel, for convenience sake.

Although the SUS430 is generally inexpensive for the stainless steel, it is regarded as a kind of steel which is relatively easily-oxidized by reason that only a small amount of Cr is added, an oxide film formed on a surface thereof is relatively thin, and molybdenum (Mo), titanium (Ti), niobium (Nb) or the like, which has a function of repairing the oxide film when it is damaged, is not added. The characteristic feature of the gas sensor 1 according to the present preferred embodiment is that the signal abnormality can be suppressed while the inner tube stainless steel such as the SUS430 is selected as the material of the inner tube 6.

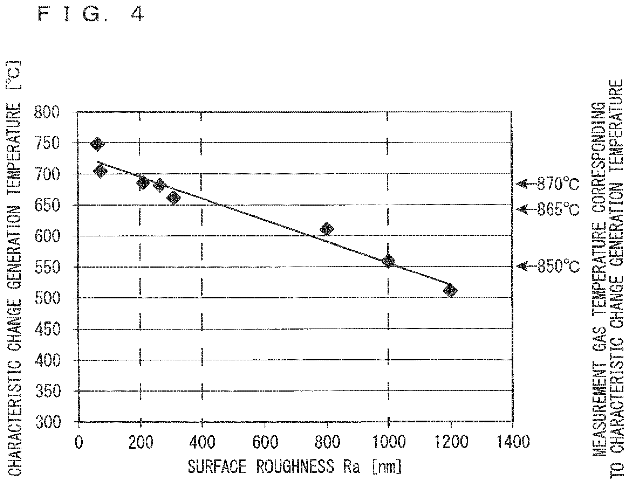

Fig. 4 is a graph showing a relationship between the surface roughness of the outer periphery surface 6s of the inner tube 6 made of the SUS430 provided in the gas sensor 1 and a characteristic change generation temperature when the gas sensor 1 is driven for the first time. The surface roughness (Ra) of the outer periphery surface 6s of the inner tube 6 is varied in eight standards of 70 nm, 80 nm, 200 nm, 225 nm, 800 nm, 1000 nm, and 1200 nm. The surface roughness of the outer periphery surface 6s of the inner tube 6 may be appropriately adjusted by a well-known method. In the present preferred embodiment, barrel polishing is applied as the method of adjusting the surface roughness and a polishing condition is varied to prepare the plurality of inner tubes 6 each having different surface roughness (Ra) of the outer periphery surface 6s. In the present preferred embodiment, a value of the surface roughness (Ra) is evaluated using a noncontact surface shape measuring device (manufactured by Zygo Corporation).

The characteristic change generation temperature is a temperature of the nut portion 3b of the screw nut 3 at which the signal abnormality presumably occurs with a probability of 1% when the gas sensor 1 is driven for the first time. In other words, the characteristic change generation temperature indicates a temperature where it is determined that the signal abnormality does not occur in the gas sensor 1 until the temperature of the screw nut 3 reaches the indicated temperature.

The characteristic change generation temperature shown in Fig. 4 is obtained by reading from Weibull plot the temperature that the probability of occurrence of signal abnormality becomes 1%. More specifically, the characteristic change generation temperature is obtained from a result of the Weibull plot of the temperature of the nut portion 3b when the signal abnormality occurs in a state where seven gas sensors 1 having the same surface roughness (Ra) of the outer periphery surface 6s of the inner tube 6 are prepared, each gas sensor 1 is screwed, by the screw nut 3, to an evaluation pipe through which an evaluation gas equivalent to the measurement gas flows and is then driven, and a temperature of the evaluation gas is gradually raised. A temperature of the sensor element 100 heated by the heater 72 at a time of driving the gas sensor 1 is set to 850 °C.

The nut portion 3b is used as a heat-measurement object by reason that it is hard to directly measure the temperature of the inner tube 6 provided inside the gas sensor 1 when the gas sensor 1 is driven in the above state, however, the nut portion 3b is located outside of the evaluation pipe and exposed outward, so that the temperature of the nut portion 3b can be measured easily. A type K thermocouple is used for measuring the temperature of the nut portion 3b. It is previously confirmed that there is a correlation between the temperature of the evaluation gas (the temperature of the measurement gas) and the temperature of the nut portion 3b when the gas sensor 1 is driven. For example, when the temperature of the measurement gas is approximately 850 °C, the temperature of the screw nut 3 is approximately 550 °C, when the temperature of the measurement gas is approximately 865 °C, the temperature of the screw nut 3 is approximately 640 °C, and when the temperature of the measurement gas is approximately 870 °C, the temperature of the screw nut 3 is approximately 680 °C.

The graph in Fig. 4 shows that the characteristic change generation temperature decreases as the value of the surface roughness (Ra) of the outer periphery surface 6s of the inner tube 6 increases, and the characteristic change generation temperature changes approximately linearly with respect to the value of the surface roughness (Ra) of the outer periphery surface 6s of the inner tube 6. The above result indicates that the oxidization of the inner tube 6 is suppressed as the value of the surface roughness (Ra) of the outer periphery surface 6s of the inner tube 6 decreases. It is considered to be caused because in case of the SUS430, the oxide film formed on convex portions becomes thinner as the surface roughness increases and thus is likely to be easily-damaged, and a surface area becomes larger as the surface roughness increases, accordingly, an area in which the oxidization promotes also becomes larger. The result similar to the graph shown in Fig. 4 is obtained in case of the inner tube stainless steel other than the SUS430.

In the present preferred embodiment, according to the above result, the inner tube 6 formed of the inner tube stainless steel of the SUS430 or other in which the surface roughness (Ra) of the outer periphery surface 6s is 1000 nm or less is used. In the above Amended July 2020 case, the characteristic change generation temperature is approximately 550 °C or more, so that the occurrence of the signal abnormality caused by the oxidization of the inner tube 6 is prevented for the measurement gas of at least approximately 850 °C or less. The temperature of 850 °C corresponds to a general upper value of a temperature that an exhaust gas discharged from an internal combustion engine, usually a car engine, can normally reach.

Preferably, the inner tube 6 formed of the inner tube stainless steel of the SUS430 or other in which the surface roughness (Ra) of the outer periphery surface 6s is 400 nm or less is used. In the above case, the characteristic change generation temperature is approximately 640 °C or more, so that the occurrence of the signal abnormality caused by the oxidization of the inner tube 6 is prevented for the measurement gas of at least approximately 865 °C or less. The above configuration makes the occurrence of the oxidization of the inner tube 6 more difficult compared to a case that the surface roughness (Ra) of the outer periphery surface 6s is 1000 nm.

More preferably, the inner tube 6 formed of the inner tube stainless steel of the SUS430 or other in which the surface roughness (Ra) of the outer periphery surface 6s is 200 nm or less is used. In the above case, the characteristic change generation temperature is approximately 680 °C or more, so that the occurrence of the signal abnormality caused by the oxidization of the inner tube 6 is prevented for the measurement gas of at least approximately 870 °C or less. The above configuration makes the occurrence of the oxidization of the inner tube 6 furthermore difficult.

As described above, according to the present preferred embodiment, the inner tube used, in the gas sensor, as the metal member sealing the sensor element inside and facing the reference gas space is formed of the inner tube stainless steel which meets the above composition range, such as the SUS430, and in which the surface roughness (Ra) of the outer periphery surface is 1000 nm or less. Accordingly, even when the inner tube is provided using the inner tube stainless steel which is relatively easily-oxidized, although inexpensive for the stainless steel, the oxidization of the inner tube is preferably suppressed despite the temperature increase of the inner tube caused by the measurement gas atmosphere of the high-temperature and the heating of the heater provided in the sensor element, so that the occurrence of the signal abnormality is preferably suppressed when the gas sensor is driven for the first time.

### <Modification Example>

In the above preferred embodiment, as for the inner tube 6, not only the material but also the surface roughness of the outer periphery surface 6s are regulated, however, the second cover 4 facing the reference gas space may be also formed of the inner tube stainless steel in which the inner surface roughness (Ra) is 1000 nm or less in the same manner as the inner tube 6. Although the second cover 4 is in contact with the screw nut 3, it is directly in contact with the external atmosphere, and in the meanwhile, it is apart from the sensor element 100, so that its temperature increase is limited compared to the inner tube 6. Accordingly, the above configuration is not necessary.

## Claims

1. A gas sensor (1), comprising:
a first space (4a) being an inner space for inclusion of a reference gas including air;
a sensor element (100) including:
a gas distribution part (10) to which a measurement gas is introduced, said gas distribution part (10) being provided on one end of said sensor element (100);
a reference gas inlet space (43) to which said reference gas is introduced, said reference gas inlet space (43) being provided on the other end of said sensor element (100);
a reference electrode (42) for being in contact with said reference gas, said reference electrode (42) being provided at a position to be communicated with said reference gas inlet space (43); and
a measurement electrode (44) for being in contact with said measurement gas included in a second space (40), which is separated from said first space (4a), said measurement electrode (44) being provided in said gas distribution part;
a plurality of annularly-mounted members (7, 8, 9) being annularly mounted to a periphery of said sensor element (100);
a metal member, which is a cylindrical inner tube (6) being annularly mounted to a periphery of said annularly-mounted members (7, 8, 9) and being able to receive a heat conduction from at least said measurement gas, a periphery surface (6s) of said cylindrical inner tube (6) facing and contacting said first space (4a);
a cylindrical cover (4) which is a cylindrical member partitioning said first space (4a) and the outside of the gas sensor, said first space (4a) being formed inside said cylindrical cover (4);
wherein said gas sensor (1) obtains a concentration of a predetermined gas component in said measurement gas using a potential difference between said reference electrode (42) and said measurement electrode (44),
said cylindrical inner tube (6) is formed of a ferritic stainless steel including chrome of 11.00 to 18.00 wt% but not including molybdenum, titanium, and niobium, and
a surface roughness Ra of said periphery surface (6s) of said cylindrical inner tube (6) facing said first space (4a) is 1000 nm or less.

2. The gas sensor (1) according to claim 1, further comprising:
a heater (72) being provided inside said sensor element (100),
wherein said cylindrical inner tube (6) is disposed at a position to be able to receive a heat conduction from said measurement gas and a heat conduction from said heater (72).

3. The gas sensor (1) according to claim 1 or claim 2,
wherein a surface roughness Ra of said periphery surface (6s) of said cylindrical inner tube (6) facing said first space (4a) is 400 nm or less.

4. The gas sensor (1) according to claim 3,
wherein a surface roughness Ra of said periphery surface (6s) of said cylindrical inner tube (6) facing said first space (4a) is 200 nm or less.

## Patentansprüche

1. Gassensor (1), umfassend:
einen ersten Raum (4a), der ein Innenraum für das Einschließen eines Referenzgases einschließlich Luft ist;
ein Sensorelement (100), einschließlich:
eines Gasverteilungsteils (10), in das ein Messgas eingeführt wird, wobei das Gasverteilungsteil (10) an einem Ende des Sensorelements (100) bereitgestellt ist;
eines Referenzgaseinlassraums (43), in den das Referenzgas eingeführt wird, wobei der Referenzgaseinlassraum (43) an dem anderen Ende des Sensorelements (100) bereitgestellt ist;
einer Referenzelektrode (42), um mit dem Referenzgas in Kontakt zu stehen, wobei die Referenzelektrode (42) an einer Position bereitgestellt ist, in der sie mit dem Referenzgaseinlassraum (43) kommuniziert; und
einer Messelektrode (44), um mit dem in einem zweiten Raum (40), der von dem ersten Raum (4a) getrennt ist, eingeschlossenen Messgas in Kontakt zu stehen, wobei die Messelektrode (44) in dem Gasverteilungsteil bereitgestellt ist;
eine Vielzahl ringförmig angebrachter Elemente (7, 8, 9), die ringförmig an einem Umfang des Sensorelements (100) angebracht sind;
ein Metallelement, das ein zylindrisches Innenrohr (6) ist, das ringförmig an einem Umfang der ringförmig angebrachten Elemente (7, 8, 9) angebracht ist und in der Lage ist, eine Wärmeleitung von zumindest dem Messgas zu empfangen, wobei eine Umfangsfläche (6s) des zylindrischen Innenrohrs (6) dem ersten Raum (4a) zugewandt ist und mit diesem in Kontakt ist;
eine zylindrische Abdeckung (4), die ein zylindrisches Element ist, das den ersten Raum (4a) von der Außenseite des Gassensors abtrennt, wobei der erste Raum (4a) innerhalb der zylindrischen Abdeckung (4) ausgebildet ist;
wobei der Gassensor (1) eine Konzentration einer vorgegebenen Gaskomponente in dem Messgas erhält, unter Verwendung einer Potentialdifferenz zwischen der Referenzelektrode (42) und der Messelektrode (44),
das zylindrische Innenrohr (6) aus einem ferritischen Edelstahl einschließlich Chrom von 11,00 bis 18,00 Gew.-%, jedoch ausschließlich Molybdän, Titan und Niob, gebildet ist, und
eine Oberflächenrauigkeit Ra der Umfangsfläche (6s) des zylindrischen Innenrohrs (6), das dem ersten Raum (4a) zugewandt ist, 1000 nm oder weniger beträgt.

2. Gassensor (1) nach Anspruch 1, ferner umfassend:
ein Heizelement (72), das innerhalb des Sensorelements (100) bereitgestellt ist,
wobei das zylindrische Innenrohr (6) in einer Position angeordnet ist, in der es eine Wärmeleitung des Messgases und eine Wärmeleitung des Heizelements (72) empfangen kann.

3. Gassensor (1) nach Anspruch 1 oder 2,
wobei eine Oberflächenrauigkeit Ra der Umfangsfläche (6s) des zylindrischen Innenrohrs (6), das dem ersten Raum (4a) zugewandt ist, 400 nm oder weniger beträgt.

4. Gassensor (1) nach Anspruch 3,
wobei eine Oberflächenrauigkeit Ra der Umfangsfläche (6s) des zylindrischen Innenrohrs (6), das dem ersten Raum (4a) zugewandt ist, 200 nm oder weniger beträgt.

## Revendications

1. Capteur de gaz (1), comprenant :
un premier espace (4a) étant un espace intérieur pour inclusion d'un gaz de référence comprenant de l'air ;
un élément de capteur (100) comprenant :
une partie de distribution de gaz (10) dans laquelle un gaz de mesure est introduit, ladite partie de distribution de gaz (10) étant prévue à une extrémité dudit élément de capteur (100) ;
un espace d'entrée de gaz de référence (43) dans lequel ledit gaz de référence est introduit, ledit espace d'entrée de gaz de référence (43) étant prévu à l'autre extrémité dudit élément de capteur (100) ;
une électrode de référence (42) destinée à être en contact avec ledit gaz de référence, ladite électrode de référence (42) étant prévue dans une position pour être mise en communication avec ledit espace d'entrée de gaz de référence (43) ; et
une électrode de mesure (44) destinée à être en contact avec ledit gaz de mesure inclus dans un second espace (40), qui est séparé dudit premier espace (4a), ladite électrode de mesure (44) étant prévue dans ladite partie de distribution de gaz ;
une pluralité d'éléments montés de manière annulaire (7, 8, 9) étant montés de manière annulaire sur une périphérie dudit élément de capteur (100) ;
un élément métallique, qui est un tube intérieur cylindrique (6) monté de manière annulaire sur une périphérie desdits éléments montés de manière annulaire (7, 8, 9) et pouvant recevoir une conduction thermique à partir d'au moins ledit gaz de mesure, une surface périphérique (6s) dudit tube intérieur cylindrique (6) faisant face audit premier espace (4a), et venant en contact avec celui-ci ;
un couvercle cylindrique (4) qui est un élément cylindrique séparant ledit premier espace (4a) et l'extérieur du capteur de gaz, ledit premier espace (4a) étant formé à l'intérieur dudit couvercle cylindrique (4) ;
dans lequel ledit capteur de gaz (1) obtient une concentration d'un composant gazeux prédéterminé dans ledit gaz de mesure en utilisant une différence de potentiel entre ladite électrode de référence (42) et ladite électrode de mesure (44),
ledit tube intérieur cylindrique (6) est formé d'un acier inoxydable ferritique comprenant du chrome pour 11,00 à 18,00 % en poids mais ne comprenant pas de molybdène, de titane et de niobium, et
une rugosité de surface Ra de ladite surface périphérique (6s) dudit tube intérieur cylindrique (6) faisant face audit premier espace (4a) est de 1000 nm ou moins.

2. Capteur de gaz (1) selon la revendication 1, comprenant en outre :
un dispositif de chauffage (72) prévu à l'intérieur dudit élément de capteur (100),
dans lequel ledit tube intérieur cylindrique (6) est disposé dans une position pour pouvoir recevoir une conduction thermique à partir dudit gaz de mesure et une conduction thermique à partir dudit dispositif de chauffage (72) .

3. Capteur de gaz (1) selon la revendication 1 ou la revendication 2 :
dans lequel une rugosité de surface Ra de ladite surface périphérique (6s) dudit tube intérieur cylindrique (6) faisant face audit premier espace (4a) est de 400 nm ou moins.

4. Capteur de gaz (1) selon la revendication 3,
dans lequel une rugosité de surface Ra de ladite surface périphérique (6s) dudit tube intérieur cylindrique (6) faisant face audit premier espace (4a) est de 200 nm ou moins.
